# EUROPEAN PATENT APPLICATION

(11) **EP 2 030 668 A1**
(43) Date of publication of application: **04.03.2009**
(21) Application number: 07017109.5
(22) Date of filing: 31.08.2007
(51) Int. Cl.: B01D 53/22, B01D 69/14, B01D 71/02, B01D 67/00

(54) **Robust mixed conducting membrane structure**

(71) Applicant: Technical University of Denmark, 2800 Kgs. Lyngby (DK)
(72) Inventor: Linderoth, Søren, 4000 Roskilde (DK); Larsen, Peter Halvor, 4000 Roskilde (DK)
(74) Representative: Grünecker, Kinkeldey, Stockmair & Schwanhäusser Anwaltssozietät

(57) **Abstract**

The present invention provides a membrane, comprising in said order a first electronically conducting layer, an ionically conducting layer, and a second electronically conducting layer,
**characterized in that** the first and second electronically conducting layers are internally short circuited.

The present invention further provides a method of producing the above membrane, comprising the steps of :
providing a ionically conducting layer;
applying at least one layer of electronically conducting material on each side of said ionically conducting layer;
sintering the multilayer structure; and
impregnating the electronically conducting layers with a catalyst material or catalyst precursor material.

## Description

### Field of the invention

The present invention relates to a membrane which comprises a first electronically conducting layer, an ionically conducting layer, and a second electronically conducting layer, wherein the electronically conducting layers are internally short circuited, and a method of producing same.

### Background of the invention

Generally, separation membranes are made from various inorganic or organic materials, including ceramics, metals and polymers. For example, ceramic structures are oxygen ion conductors and are suitable to cause selective permeation of oxygen ions at high temperatures, such as about 500°C or higher. Membranes comprising at least a layer of said ceramic materials are therefore suitable to separate oxygen from oxygen containing gas mixtures.

More specifically, it has been suggested to apply electrodes to both sides of a ceramic membrane structure and to connect said electrodes externally. On one side of the membrane, the oxygen partial pressure is adjusted to be lower than on the other side of the membrane. In said configuration, oxygen atoms at the side with the higher oxygen partial pressure accept electrons and become oxygen ions, which diffuse through the membrane to the opposite electrode, where they discharge and leave the membrane, either as oxygen molecules or, in the case of a combustible gas being present, as part of a combustion product. The electrons are transferred back via an external circuit to the first electrode. As a result, oxygen is continuously separated from the gas at the side of the membrane which has the higher oxygen partial pressure.

US patent 6,033,632 relates to solid state gas-impermeable, ceramic membranes useful for promotion of oxidation-reduction reactions and for oxygen gas separation. The membranes are fabricated from a single-component material which exhibits both electron and oxygen-anion conductivity. Said material has a brownmillerite structure with the general formula A₂B₂O₅.

EP-A-0 766 330 discloses a solid multi-component membrane which comprises intimate, gas-impervious, multi-phase mixtures of an electronically-conductive phase and/or gas-impervious "single phase" mixed metal oxides having a perovskite structure and having both electron-conductive and oxygen ion-conductive properties.

Such membranes are also suitable for partial oxidation processes, for instance oxidation of methane gas to produce syngas, i.e. a mixture of CO and H₂.

Some oxygen ion conductors also exhibit electron conductivity, referred to as electron - oxygen ion 'mixed conductors'. In case of using a mixed conductor, it is possible to cause continuous permeation of oxygen ions without the need for external electrodes. Alternatively, dual conducting mixtures may be prepared by mixing an oxygen-conducting material with an electronically conducting material to form a composite, multi-component, non-single phase material.

The following Table lists some of the proposed materials for oxygen separation together with some of their properties.

**Table 1: Oxide ion conductivity and PO₂ stability limits of membrane candidate materials**

| | σₒ (S/m) (1073 K) | σₒ (S/m) (1273 K) | estimated decompositon *p*_{O₂} (atm) |
|---|---|---|---|
| La_{0.6}Sr_{0.4}FeO_{3-δ} | 1[1] | 20 [1] | 10⁻¹⁷ (1273 K) |
| | | | 10⁻¹⁴ (1473 K) |
| La₀.₆Sr_{0.4}Co_{0.2}Fe_{0.8}O_{3-δ} | 4 [3] | 20 [3] | 10⁻⁷ (1273 K) |
| La_{0.6}Sr_{0.4}CoO_{3-δ} | 6 [4] | 40 [4] | 10⁻⁷ (1273 K) |
| Ba_{0.5}Sr_{0.5}FeO_{3-δ} | > 4 [5] | > 8 [5] | 10⁻¹⁷ (1273 K) |
| Ba_{0.5}Sr_{0.5}Co_{0.8}Fe_{0.2}O_{3-δ} | > 27 [5] | > 47 [5] | 10⁻⁷ (1273 K) |
| Ce_{0.9}Cd_{0.1}O_{1.95-δ} | 6 [6] | 16 [6] | - |
| Ce_{0.8}Gd_{0.2}O_{1.9-δ} | 6 [6], 20 [7] | 16 [6], 25 [7] | - |
| Y_{0.16}Zr_{0.84}O_{1.92} | | 10 | - |

| | | | |
|---|---|---|---|
| References in Table 1: [1] M. Søgaard, P. V. Hendriksen, M. Mogensen, "Oxygen nonstoichiometry and transport properties of strontium substituted lanthanum ferrite", J. Solid State Chem 180 (2007) 1489-1503. [2] T. Nakamura, G. Petzow, L. J. Gauckler, "Stability of the perovskite phase LaBO3 (B = V, Cr, Mn, Fe, Co, Ni) in a reducing atmosphere i. experimental results", Materials Research Bulletin 14 (1979) 649-659. [3] B. Dalslet, M. Søgaard, P. V. Hendriksen, "Determination of oxygen transport properties from flux and driving force measurements using an oxygen pump and an electrolyte probe", J. Electrochem. Soc., to be published. [4] M. Søgaard, P. V. Hendriksen, M. Mogensen, F. W. Poulsen, E. Skou, "Oxygen nonstoichiometry and transport properties of strontium substituted lanthanum cobaltite", Solid State Ionics 177 (2006) 3285-3296. [5] Z. Chen, R. Ran,W. Zhou, Z. Shao, S. Liu, "Assessment of Ba0.5Sr0.5Co1-yFeyO3-δ (y=0.0-1.0) for prospective application as cathode for it-SOFCs or oxygen permeating membrane", Electrochimica Acta 52 (2007) 7343-7351. [6] S. Wang, H. Inaba, H. Tagawa, M. Dokiya, T. Hashimoto, "Nonstoichiometry of Ce0.9Gd0.1O1.95-x", Solid State Ionics 107 (1998) 73-79. [7] N. Sammes, Z. Cai, "Ionic conductivity of ceria/yttria stabilized zirconia electrolyte materials", Solid State Ionics 100 (1997) 39-44. | | | |

Especially fluorite and perovskite structured metal oxide materials offer a number of candidates for good oxygen separation membranes. Table 1 lists the oxygen ion conductivity, σₒ of these materials as well as the pO₂ of decomposition at various temperatures (The pO₂ of decomposition is estimated as the pO₂ of decomposition of LaCoO₃ for the Co containing perovskites, and the pO₂ of decomposition of LaFeO₃ for the Fe containing perovskites). The other listed materials in Table 1 are stable in the pO₂ range required for syngas production.

As is evident from the Table, the Co-containing perovskites exhibit a high ionic conductivity. However, they do not posses sufficient thermodynamic stability for operating at low pO₂, as is required for instance for production of synthesis gas in a membrane reactor.

On the other hand, of the materials possessing sufficient thermodynamic stability as required for syngas production, doped Ceria possesses the highest ionic conductivity as compared to the above perovskite candidates.

The performance of a mixed conducting membrane will in general be limited by either the electronic or the ionic conductivity, whichever is lower. For the perovskite materials the ionic conductivity is generally the limiting factor, whereas the electronic conductivity is the limiting factor for the fluorite materials. At high pO₂, the performance of Ce_{0.9}Gd_{0.1}O_{1.95-δ} and Ce_{0.8}Gd_{0.2}O_{1.9-δ} will be limited by their electronic conductivity. It has been suggested to enhance the electronic conductivity by using Pr substitution rather than Gd substitution. However, in order to improve the performance of the membrane, for example for the syngas production, new materials are desired exhibiting a better balance of ionic and electronic conductivity to overcome the current limits as provided by the prior art.

Additionally, membranes can be used to separate hydrogen. Hydrogen can serve as a clean fuel for powering many devices ranging from large turbine engines in integrated gasification combined cycle electric power plants, to small fuel cells. Hydrogen can also power automobiles, and large quantities are used in petroleum refining.

In operation, the above described ceramic membranes are exposed to extreme conditions. The opposite sides of the membrane are simultaneously exposed to a highly oxidizing and a highly reducing atmosphere at high temperatures, respectively. Also the thermal expansion of the membrane at high temperatures might result in stress to the other parts of the apparatus containing said membrane. The membranes therefore need chemical stability with respect to decomposition and should further exhibit suitable expansion properties.

However, the membranes proposed in the prior art do not result in membranes having a good balance of ionic and electronic conductivity, limiting the membrane efficiency due to the inherent limit of either the electrical or ionic conductivity of the employed materials. There is thus still a need for membrane structures which are cheap, easy to manufacture, provide a good balance of a mixed ionic and electronic conductivity while exhibiting a chemical stability under the relevant oxygen partial pressures, and which are mechanically robust.

### Object of the present invention

In view of the membranes suggested in the prior at, it was the object of the present invention to provide an improved mechanically robust membrane having both, high electron conductivity and high oxide ion conductivity while being excellent in heat resistance and not requiring an external circuit for the transport of electrons, and a method for producing same.

### Summary of the invention

The above object is achieved by a membrane, comprising in said order a first electronically conducting layer, an ionically conducting layer, and a second electronically conducting layer,
characterized in that the first and second electronically conducting layers are internally short circuited.

The above object is further achieved by a method of producing the above membrane, comprising the steps of:
providing a ionically conducting layer;
applying at least one layer of electronically conducting material on each side of said ionically conducting layer;
sintering the multilayer structure; and
impregnating the electronically conducting layers with a catalyst material or catalyst precursor material.

Preferred embodiments are set forth in the subclaims and the detailed description of the invention below.

### Brief description of the drawings

Figures 1A and 1B illustrate one embodiment of the present invention, wherein electronically conductive paths are formed through the ionically conducting layer 2.
Figures 2A and 2B illustrate another embodiment of the present invention, wherein electronically conductive material has been applied to the sides of the ionically conducting layer so as to 'edge' short circuit the first and second electronically conductive layer on either side of the ionically conducting layer.

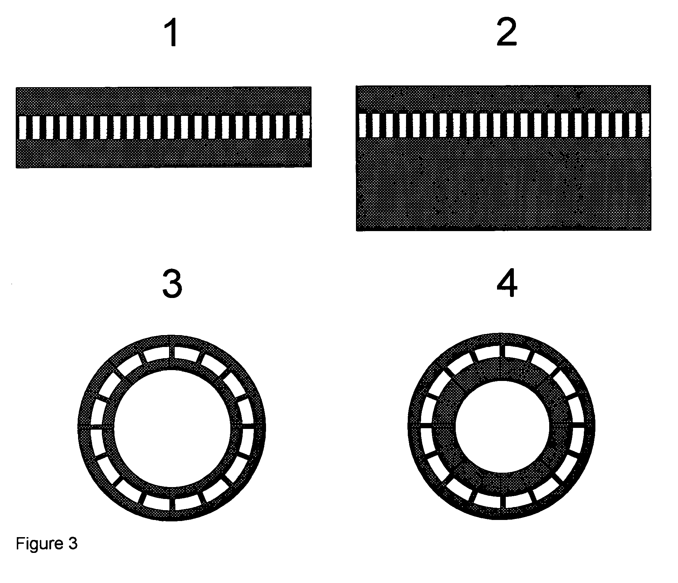

Figure 3 illustrates some embodiments of the invention having different designs: a symmetrical flat plate, a flat plate with thick support, a symmetrical tubular membrane and a tubular membrane with a thick support.

### Detailed description of the invention

The present invention relates to a membrane, comprising in said order a first electronically conducting layer, an ionically conducting layer, and a second electronically conducting layer,
characterized in that the first and second electronically conducting layers are internally short circuited.

Advantageously, the membrane is manufactured from cheap materials and does not require external circuits for the transport of electrons, further reducing the costs and simplifying the process for manufacturing said membrane. By 'internal' short circuiting it is referred to a membrane structure being short circuited without the need to apply external means for short circuiting, such as additional external circuits for the transport of electrons being connected around the membrane by an additional means therefor. Thus, the membrane of the present invention provides short circuiting due to it's inherent structure and by the materials of the membrane themselves being formed such that the structure is short circuited, as will be explained in detail below with reference to preferred embodiments.

The membrane of the present invention is preferably a symmetrical structure, wherein the ionically conductive layer is sandwiched by two electronically conducting layers. The thermal expansion coefficient (TEC) of the electronically conducting layers is higher than the TEC of the ionically conducting layer, leading to compressive force at lower temperatures and during cooling cycles of the membrane. This results in higher robustness of the structure and in return in a longer life time.

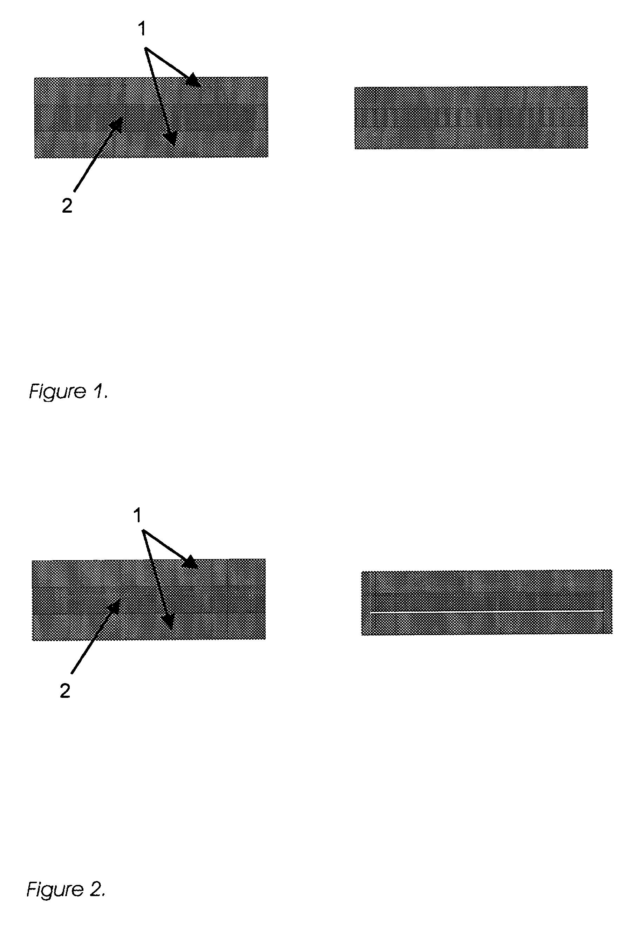

In a preferred embodiment, the first and second electronically conducting layers 1 are internally short circuited by internal electronically conducting paths which are provided through the ionically conducting layer 2 , as illustrated in Figures 1A and 1B. After sintering, multiple electronically conducting path connect the electronically conducting layers on each side of the ionically conducting layer through the ionically conducting layer.

The electronically conducting path are formed during the manufacturing process by growth into the ionically conducting layer from both sides, eventually connecting to form a short circuiting path through the ionically conducting material.

In an alternative preferred embodiment, the first and second electronically conducting layers which sandwich the ionically conducting layer are edge short circuited by electronically conducting material being formed around said ionically conducting layer and connecting the first and second electronically conducting layers. This embodiment is illustrated in Figures 2A and 2B. This embodiment is especially preferred for ionically conducting materials used as the ionically conducting layer which do not allow for a growth of path through the material during the manufacturing.

In an alternative preferred embodiment, the ionically conductive layer is short circuited by the addition of an electronic conductor to the ionically conducting layer prior to shaping the membrane structure, as illustrated for example in Examples 2 and 3.

Of course, both alternatives can be combined so that the membrane comprises both, path through the ionically conducting layer together with edge short circuited connections.

The electronically conductive layers preferably comprise a metal. Metallic layers advantageously have a high thermal conductivity and allow fast thermal cycling. Moreover, thermal gradients within the membrane structure are minimized. Metallic layers also provide improved mechanical stability to the membrane structure and make the membrane more robust against external detrimental effects. Finally, a greater redox stability is achieved.

The electronically conductive layers are porous layers. The porosity of the electronically conducting layer is preferably in the range of 20 to 70%, more preferably from 30 to 60%, and most preferably from 35 to 55%. The pore size is preferably in the range of 0.5 to 10 µm, more preferably from 1 to 6 µm and most preferred from 2 to 5 µm.

The material for the porous metal containing layers is preferably selected from the group of Fe_{1-x-y}CrₓMa_{y} alloys, wherein Ma is Ni, Ti, Ce, Mn, Mo, W, Co, La, Y, or Al, and or metal oxides such as Al₂O₃, TiO₂ or Cr₂O₃. The layers may also contain doped ceria or doped zirconia. Suitable dopants are Sc, Y, Ce, Ga, Sm, Gd, Ca and/or any Ln element, or combinations thereof. Preferred dopants for zirconia are Sc or Y. A preferred dopant for ceria is Gd. Ln = lanthanides.

The electronically conductive layers may also comprise alloys which may be full or partly oxidised materials, for example Fe₂O₃, Cr₂O₃, or Fe-Cr mixtures which form the respective alloy composition during the process. For more details on suitable materials it is also referred to WO 2006/074932.

Other suitable materials may also be chosen from Ni-based alloys or other alloys as long as they provide the required electronically conducting properties.

Of course, the electronically conducting layers may alternatively be formed from materials other than metals as long as they provide the required electronically conducting properties. For more details on suitable materials see EP 1356535 B1.

Suitable materials for impregnating the electronically conductive layer intended as the later catalyst layer on the 'air side' for the reduction of oxygen are preferably one or more materials selected from the group of (Ma₁₋ₓMbₓ)(Mc_{1-y}Mdy)O_{3-δ}, doped ceria or doped zirconia, or mixtures thereof (Ma = lanthanides or Y, preferably La; Mb = earth alkali elements, preferably Sr; Mc and Md are one or more elements chosen from the group of transition metals, preferably one or more of the type Mn, Fe, Co).

Suitable materials for impregnating the electronically conductive layer intended as the later catalyst layer opposite to the air side include materials selected from the group of Ni, Ni-Fe alloy, Ru, Pt, doped ceria, or doped zirconia, or mixtures thereof. The dopants are the same as mentioned earlier. Alternatively, MaₛTi₁₋ₓMbₓO_{3-δ}, Ma = Ba, Sr, Ca; Mb = V, Nb, Ta, Mo, W, Th, U; 0.90 ≤ s ≤ 1.05; or LnCr₁₋ₓMₓO_{3- δ}, M = T, V, Mn, Nb, Mo, W, Th, U may be used as catalyst materials.

In a further preferred embodiment, an additional bonding layer may be located between the ionically conducting layer and one or each of the adjacent electronically conducting layers. The bonding layers comprise ionically conductive and electronically conductive material, preferably the materials used for the respective layers adjacent to the bonding layers, so as to provide an improved adhesion of the layers. As the TEC of the bonding layers is larger than the TEC of the ionically conducting layer, but smaller than the TEC of the electronically conducting layers, the mechanical strength is improved. If a bonding layer is present, said bonding layer will be functioning as the catalyst layer as it is located next to the electronically and ionically conducting layer. The bonding layer thus comprises catalytic material.

The membrane can generally have any desired shape. However, flat and tubular designs are preferred for easier application of the respective layers on each other.

The ionically conducting layer is an oxygen ion conductor or proton conductor. Suitable materials having oxygen ion conducting properties include doped ceria (Ce₁₋ₓMₓO_{2-δ}, where M = Ca, Sm, Gd, Sc, Ga, Y and/or any lanthanide (Ln) element, or combinations thereof); and doped zirconia (Zr₁₋ₓMₓO_{2-δ}, where M = Sc, Y, Ce, Ga or combinations thereof), and materials of the "apatite" type.

Suitable materials having proton conducting properties include perovskites with the general formula ABO₃, where A = Ca, Sr, Ba; B = Ce, Zr, Ti, Sn. Other suitable materials are e.g. Ba₂YSnO_{5.5}, Sr₂(ScNb)O₆, LnZr₂O₇, LaPO₄ and Ba₃B'B"O₉ (B'=Ca,Sr; B"=Nb, Ta).

Electronically conducting material may be mixed into the ionically conducting layer prior to shaping, as illustrated in Examples 2 and 3.

The present invention further provides a method of producing the above membrane, comprising the steps of:
providing an ionically conducting layer;
applying at least one layer of electronically conducting material on each side of said ionically conducting layer;
sintering the multilayer structure; and
impregnating the electronically conducting layers with a catalyst material or catalyst precursor material.

Since no external circuits for transporting electrons are required, the method is simple and cost effective. As cheap materials may be used for the formation of the membrane, the overall production costs can be advantageously kept at a minimum.

The first layer may be, for example, formed by tape casting. If a tubular design is desired, extrusion processes may be employed, as is known to a person skilled in the art. The additional layers may be separately tape cast, followed by lamination of the layers. Alternatively, screen printing, spray painting or dip coating methods may be used for the formation of the respective layers.

The sintering of the obtained multilayer structure is preferably performed under reducing conditions. The temperatures are preferably in the range of about 700°C to 1400°C, more preferably from about 800°C to 1350°C.

The electronically conducting layers are preferably impregnated, more preferably vacuum impregnated with a solution or suspension of the catalyst or catalyst precursor. Alternatively, electrophoretic deposition (EPD) may be employed to apply the catalyst or catalyst precursor.

The step of applying at least one layer of electronically conducting material on each side of the ionically conducting layer preferably comprises the application of said electronically conductive material to two edges of the ionically conducting layer so as to short circuit said electronically conductive layers on each side of the ionically conducting layer.

Alternatively, the method comprises the step of growing electronically conducting material from each side of the ionically conducting layer into the ionically conducting material so as to short circuit said electronically conductive layers on each side of the ionically conducting layer.

Of course, both steps can be combined with each other if desired.

The membrane of the present invention is especially suitable for oxygen separation and for supplying oxygen to a partial oxidation process of a hydrocarbon fuel to syngas in a membrane reactor.

The present invention will now be described in more detail with reference to the following examples. The invention is however not intended to be limited thereto.

### Examples

### Example 1

A symmetric flat plate membrane structure as illustrated in Figure 1 is obtained.

The first step was the tape-casting of a metal containing layer and a membrane layer.

Suspensions for tape-casting were manufactured by means of ball milling of powders with polyvinyl pyrrolidone (PVP), polyvinyl butyral (PVB) and EtOH + MEK as additives. After control of the particle size, the suspensions were tape-cast using a double doctor blade system and the tapes are subsequently dried.

Layer 1 (metal containing layer): The suspension comprised Fe22Cr. The green thickness was in the range of 50 to 70 µm. The sintered porosity of the layer was about 50% with a pore size in the range of 1 to 2 µm.

Layer 2 (membrane layer): The suspension comprised Ce_{0.9}Gd_{0.1}O_{2-δ} (CGO10) powder. The green thickness of the foil was around 25 µm. The sintered density of the layer was >96% of theoretical density.

The second step was the lamination of the above mentioned foils into symmetrical structure: metal containing layer - membrane layer - metal containing layer, as illustrated in Figure 1. The lamination was performed by the use of heated rolls in a double roll set-up.

In the third step, the laminated tapes were cut into square pieces. This was done by knife punching resulting in sintered areas in the range of 12x12 cm².

In the fourth step, the structure was heated at an increase of about 50°C/h to about 500°C under flowing air. After 2 hours of soaking, the furnace was evacuated and H₂ introduced. After 3 hours soaking time, the furnace was heated to about 1250°C with a temperature increase of 100°C/h and left for 5 hours before cooling to room temperature.

The fifth step was the impregnation of the oxidation catalyst layer. A nitrate solution of La, Sr, Co and Fe was vacuum infiltrated into the porous structure. The infiltration was performed four times with an intermediate heating step for decomposition of the nitrates. The resulting composition of the impregnated cathode is La_{0.6}Sr_{0.4}Fe_{0.6}CO_{0.4}O₃.

In the sixth step the oxygen reduction catalyst layer was impregnated. A nitrate solution of Ni, Ce and Gd was vacuum infiltrated into the porous structure. The infiltration was performed five times with an intermediate heating schedule between each infiltration for decomposition of the impregnated nitrates. The resulting composition of the impregnated oxygen reducing layer was after reduction a 1:1 vol ratio of Ni and Ce_{0.9}Gd_{0.1}O_{2-δ}.

### Example 2

A symmetric flat plate membrane structure as illustrated in Figure 1 was obtained.

The first step was the tape-casting of a metal containing layer and a membrane layer.

Suspensions for tape-casting were manufactured by means of ball milling of powders with polyvinyl pyrrolidone (PVP), polyvinyl butyral (PVB) and EtOH + MEK as additives.

After control of the particle size, the suspensions were tape-cast using a double doctor blade system and the tapes are subsequently dried.

Layer 1 (metal containing layer): The suspension comprised Fe22Cr. The green thickness was in the range of about 50 to 70 µm. The sintered porosity of the layer was about 50% with a pore size in the range of 1 to 2 µm.

Layer 2 (membrane layer): The suspension comprised Ce_{0.9}Gd_{0.1}O_{2-δ} (CGO10) powder and 20 vol % Fe22Cr. The green thickness of the foil was around 25 µm. The sintered density of the layer was >96% of theoretical density.

The membrane was completed as described in Example 1 from step 2 onwards.

### Example 3

A symmetric flat plate membrane structure as illustrated in Figure 1 was obtained.

The first step was the tape-casting of a metal containing layer and a membrane layer.

Suspensions for tape-casting were manufactured by means of ball milling of powders with polyvinyl pyrrolidone (PVP), polyvinyl butyral (PVB) and EtOH + MEK as additives. After control of the particle size, the suspensions were tape-cast using a double doctor blade system and the tapes are subsequently dried.

Layer 1 (metal containing layer): The suspension comprised Fe22Cr. The green thickness was in the range of about 50 to 70 µm. The sintered porosity of the layer was about 50% with a pore size in the range of 1 to 2 µm.

Layer 2 (membrane layer): The suspension comprised Ce_{0.9}Gd_{0.1}O_{2-δ} (CGO10) powder and 30 vol % (La_{0.88}Sr_{0.12})ₛ(Cr_{0.92}V_{0.14})O_{3-δ}. The green thickness of the foil was around 25 µm. The sintered density of the layer was >96% of theoretical density.

The membrane was completed as described in Example 1 from step 2 onwards.

### Example 4

A flat plate membrane structure as produced in Example 1 was obtained. This structure comprised additional layers for improved bonding of the ionically conducting and electronically conducting layer.

The first step was tape-casting of a metal containing layer, an intermediate layer and a membrane layer.

Suspensions for tape-casting were manufactured and cast as described in Example 1.

Layer 1 (metal containing layer): The suspension comprised Fe22Cr. The green thickness was in the range of 50 to 70 µm. The sintered porosity of the layer was about 50% with a pore size in the range of 3 to 4 µm.

Layer 2 (intermediate layer): The suspension comprised 90 vol % Fe22Cr and 10 vol % CGO10. The green thickness was in the range of 25 µm. The sintered porosity of the layer was about 50% with a pore size in the range of 1 to 2 µm.

Layer 3 (membrane layer): The suspension comprised CGO10 powder. The green thickness of the foil was around 25 µm. The sintered density of the layer is >96% of theoretical density.

The second step was the lamination of the above mentioned foils into symmetrical structure: metal containing layer - intermediate layer - membrane layer - intermediate layer - metal containing layer. The lamination was performed by the use of heated rolls in a double roll set-up.

The sample was completed as described in Example 1 from step three and onwards to obtain the final membrane structure.

### Example 5

A membrane structure with a thick support layer was obtained.

The first step was tape-casting of a two different metal containing layers (∼40 µm and 400 µm, respectively) and a membrane layer.

Suspensions for tape-casting were manufactured and cast as described in Example 1.

Layer 1 (thick metal containing layer): The suspension comprised 95 vol % Fe22Cr and 5 vol% CGO10. The green thickness was in the range of 400 µm. The sintered porosity of the layer was about 50% with a pore size in the range of 4 µm.

Layer 2 (thin metal containing layer): The suspension comprised 95 vol% Fe22Cr and 5 vol% CGO10. The green thickness was in the range of 40 µm. The sintered porosity of the layer was about 40% with a pore size in the range of 3 µm.

Layer 3 (membrane layer): The suspension comprised CGO10 powder. The green thickness of the foil was around 25 µm. The sintered density of the layer was >96% of theoretical density.

The second step comprised the lamination of the above mentioned foils into symmetrical structure: thick metal containing layer - membrane layer - thin metal containing layer. The lamination was performed by the use of heated rolls in a double roll set-up.

In the third step, the laminated tapes were cut into square pieces. This was done by knife punching resulting in sintered areas in the range of 12x12 cm².

In the fourth step, the structure was heated at an increase of about 50°C/h to about 500°C under flowing air. After 2 hours of soaking, the furnace was evacuated and H₂ introduced. After 3 hours soaking time, the furnace was heated to about 1250°C with a temperature increase of 100°C/h and left for 5 hours before cooling to room temperature.

The fifth step was the impregnation of the oxidation catalyst layer. A colloidal suspension of La_{0.6}Sr_{0.4}CoO₃ was vacuum infiltrated into the porous structure. The infiltration is performed four times with an intermediate heating step for removing the solvent.

In the sixth step the oxygen reduction catalyst layer was impregnated. A colloidal suspension of NiO and CGO10 was vacuum infiltrated into the porous structure. The infiltration was performed five times with an intermediate heating schedule between each infiltration for removing the solvent.

### Example 6

A membrane structure as outlined in Example 4 was obtained, this time employing a proton conducting material.

The first step comprised the tape-casting of a metal containing layer, an intermediate layer and a membrane layer.

Suspensions for tape-casting were manufactured and cast as described in Example 1.

Layer 1 (metal containing layer): The suspension comprised Fe22Cr. The green thickness was in the range of 50 to 70 µm. The sintered porosity of the layer was about 50% with a pore size in the range of 3 to 4 µm.

Layer 2 (intermediate layer): The suspension comprised 90 vol% Fe22Cr and 10 vol% CGO10. The green thickness was in the range of 25 µm. The sintered porosity of the layer was about 50% with a pore size in the range of 1 to 2 µm.

Layer 3 (membrane layer): The suspension comprised SCYb powder (SrCe_{0.95}Yb_{0.05}O₃). The green thickness of the foil was around 20 µm. The sintered density of the layer was >96% of theoretical density.

The second step comprised the lamination of the above mentioned foils into symmetrical structure: metal containing layer - intermediate layer - membrane layer - intermediate layer - metal containing layer. The lamination was performed by the use of heated rolls in a double roll set-up.

In the third step, the laminated tapes were cut into square pieces. This was done by knife punching resulting in sintered areas in the range of 12x12 cm².

In the fourth step, the structure was heated at an increase of about 50°C/h to about 500°C under flowing air. After 2 hours of soaking, the furnace was evacuated and H₂ introduced. After 3 hours soaking time, the furnace was heated to about 1250°C with a temperature increase of 100°C/h and left for 5 hours before cooling to room temperature.

The fifth step was the impregnation of the catalyst layers. Colloidal suspension of Pd and Pt were vacuum infiltrated into the porous structure. The infiltration was performed four times with an intermediate heating step.

### Example 7

A membrane structure similar to the one of Example 5 was obtained, using zirconia instead of ceria.

The first step was tape-casting of a two different metal containing layers (∼30 µm and 300 µm, respectively) and a membrane layer.

Suspensions for tape-casting were manufactured and cast as described in Example 1.

Layer 1 (thick metal containing layer): The suspension comprised 90 vol% Fe22Cr and 10vol % Zr_{0.8}Y_{0.2}0_{2-δ} (YSZ20). The green thickness was in the range of 300 µm. The sintered porosity of the layer was about 50% with a pore size in the range of 4 µm.

Layer 2 (thin metal containing layer): The suspension comprised 90 vol% Fe22Cr and 10 vol% YSZ20. The green thickness was in the range of 30 µm. The sintered porosity of the layer was about 40% with a pore size in the range of 3 µm.

Layer 3 (membrane layer): The suspension comprised YSZ20 powder. The green thickness of the foil was around 15 µm. The sintered density of the layer was >96% of theoretical density.

The second step comprised the lamination of the above mentioned foils into symmetrical structure: thick metal containing layer - membrane layer - thin metal containing layer. The lamination was performed by the use of heated rolls in a double roll set-up.

In the third step, the laminated tapes were cut into square pieces. This was done by knife punching resulting in sintered areas in the range of 12x12 cm².

In the fourth step, the structure was heated at an increase of about 50°C/h to about 500°C under flowing air. After 2 hours of soaking, the furnace was evacuated and H₂ introduced. After 3 hours soaking time, the furnace was heated to about 1300°C with a temperature increase of 100°C/h and left for 5 hours before cooling to room temperature.

The manufacture of the structure was completed as outlined in Example 1.

### Example 8

An asymmetrical membrane structure was obtained.

The first step comprised tape-casting of a thick metal containing layer.

Suspensions for tape-casting were manufactured and cast as described in Example 1.

Thick metal containing layer: The suspension comprised 95 vol% Fe22Cr and 5 vol% YSZ20. The green thickness was in the range of 500 µm. The sintered porosity of the layer was about 50% with a pore size in the range of 4 µm.

In the second step, the dry metal tapes were cut into square pieces. This was done by knife punching resulting in sintered areas in the range of 12x12 cm².

The third step comprised the manufacture and screen printing of a metal ink (comprising 95 vol% Fe22Cr and 5 vol% YSZ20) and a membrane ink with YSZ20 on to the metal tape in the order: metal containing tape - membrane ink - metal containing ink.

The membrane structure was completed as described in Example 7 above.

### Example 9

A metal containing tubular membrane was obtained.

The first step comprised the extrusion of a metal tube based on a viscous mass of Fe22Cr powder. The green wall thickness was about 600 µm and the sintered porosity of the layer was about 50% with a pore size in the range of 5 µm.

The second step comprised spray painting of an intermediate layer on the outer surface of the tube. The suspension consisted of a mixture of 85 vol% Fe22Cr and 15 vol% CGO10. The suspension was manufactured as described for the suspensions in Example 1. The thickness was about 20 µm and the sintered porosity of the layer was about 35% with a pore size < 2 µm.

The third step comprised spray painting of a CGO10 suspension on the intermediate layer. The suspension was manufactured as described for the suspensions in Example 1. The layer was sintered to a density of more than 96% of the theoretical density.

The fourth step was spray painting of a metal suspension on the membrane layer. The suspension which was manufactured as described for the suspensions in Example 1 comprised a mixture of 90 vol% Fe22Cr and 10 vol% CGO10.

In the fifth step, the structure was heated at an increase of about 50°C/h to about 500°C under flowing air. After 2 hours of soaking, the furnace was evacuated and H₂ introduced. After 3 hours soaking time, the furnace was heated to about 1250°C with a temperature increase of 100°C/h and left for 5 hours before cooling to room temperature.

In the sixth step the oxidation catalyst layer was impregnated on the inside of the tube. A colloidal suspension of La_{0.6}Sr_{0.4}Fe_{0.6}Co_{0.4}O₃ and CGO10 (1:1 vol) was vacuum infiltrated into the porous structure. The infiltration was performed five times with an intermediate heating schedule between each infiltration for removing the solvent.

In the seventh step the oxygen reducing layer was impregnated on the outside of the tube. A colloidal suspension of NiO was vacuum infiltrated into the porous structure. The infiltration was performed six times with an intermediate heating schedule between each infiltration for removing the solvent.

### Example 10

The membrane structure was produced as outlined in Example 9 up to step 5.

In the sixth step the oxygen reducing catalyst layer was impregnated on the inside of the tube. A colloidal suspension of Ru was vacuum infiltrated into the porous structure. The infiltration was performed five times with an intermediate heating schedule between each infiltration for removing the solvent.

In the seventh step the oxidation catalyst layer was impregnated on the outside of the tube. A colloidal suspension of LSC was vacuum infiltrated into the porous structure. The infiltration was performed six times with an intermediate heating schedule between each infiltration for removing the solvent and the membrane structure finalized.

### Example 11

A membrane structure as outlined in Example 9 was obtained, but with dip coating of the layers and impregnation by EPD.

The first step comprised extrusion of a metal tube based on a viscous mass of Fe22Cr powder. The green wall thickness was about 600 µm and the sintered porosity of the layer was about 50% with a pore size in the range of 5 µm.

The second step comprised dip coating of an intermediate layer on the outer surface of the tube. The suspension consisted of a mixture of 85 vol% Fe22Cr and 15 vol% CGO10. The suspension was manufactured as described for the suspensions in Example 1. The thickness was about 20 µm and the sintered porosity of the layer was about 35% with a pore size < 2 µm.

The third step comprised the dip coating of a CGO10 suspension on the intermediate layer. The suspension was manufactured as described for the suspensions in Example 1. The layer was sintered to a density of more than 96% of the theoretical density.

The fourth step was dip coating of a metal suspension on the membrane layer. The suspension which was manufactured as described for the suspensions in Example 1 comprised a mixture of 90 vol% Fe22Cr and 10 vol% CGO10.

In the fifth step, the structure was heated at an increase of about 50°C/h to about 500°C under flowing air. After 2 hours of soaking, the furnace was evacuated and H₂ introduced. After 3 hours soaking time, the furnace was heated to about 1250°C with a temperature increase of 100°C/h and left for 5 hours before cooling to room temperature.

In the sixth step the oxidation catalyst layer was impregnated on the inside of the tube by EPD. A suspension with positively charged particles of La_{0.8}Sr_{0.2}CoO₃ (LSC20) was manufactured by employing polyethyleneimine. The infiltration was performed by applying a negative electrical field on the tube.

In the seventh step the oxygen reducing layer was impregnated on the outside of the tube. A colloidal suspension with negatively charged particles of NiO was made using ammonium polymethacrylate. The infiltration was performed by applying a positive electrical field on the tube, and the membrane structure completed.

### Example 12

A tubular membrane structure was obtained.

The first step comprised co-tape-casting of three layers. The first layer was a metal containing layer for the electrical conduction. On top of this layer membrane material was co-cast, the width being about 10 mm less than the first layer. On top of this second layer the metal-containing layer was co-cast, the width being about 10 mm less than the second layer.

Suspensions for tape-casting were manufactured by means of ball milling of powders with polyvinyl pyrrolidone (PVP), polyvinyl butyral (PVB) and EtOH + MEK as additives. After control of particle size, the suspensions were tape-cast using a double doctor blade system and the tapes were subsequently dried.

Layer 1 (metal containing layer): The suspension comprised Fe22Cr. The green thickness was in the range of 50 to 200 µm. The sintered porosity of the layer was about 50% with a pore size in the range of 1 to 2 µm.

Layer 2 (membrane layer): The suspension comprises CGO10 powder. The green thickness of the layer was around 25 µm, and the width of the tape is 10 mm less than the first layer. The sintered density of the layer was >96% of theoretical density.

Layer 3 (metal containing layer): The suspension comprised Fe22Cr. The green thickness was in the range of 50 to 100 µm. The sintered porosity of the layer was about 50% with a pore size in the range of 1 to 2 µm.

In the second step the tri-layer was cut into lengths of 20 to 150 cm. The tapes were detached from the foils and rolled into a tube (round or flat) in the "width" direction, such that membrane material (layer 2) overlapped layer 1, and such that layer 3 contacted layer 1. This "green" tube was then symmetrically hot pressed, at a temperature of 100 to 300°C.

In the third step, the laminated construction was heated at an increase of about 50°C/h to about 500°C under flowing air. After 2 hours of soaking, the furnace was evacuated and H₂ introduced. After 3 hours soaking time, the furnace was heated to about 1250°C with a temperature increase of 100°C/h and left for 5 hours before cooling to room temperature.

The fourth step was the impregnation of the oxidation catalyst layer. A nitrate solution of La, Sr, Co and Fe is vacuum infiltrated into the porous structure. The infiltration was performed four times with an intermediate heating step for decomposition of the nitrates. The resulting composition of the impregnated cathode was La_{0.6}Sr_{0.4}Fe_{0.6}Co_{0.4}O₃.

In the fifth step the oxygen reducing catalyst layer was impregnated. A nitrate solution of Ni, Ce and Gd was vacuum infiltrated into the porous structure. The infiltration was performed five times with an intermediate heating schedule between each infiltration for decomposition of the impregnated nitrates. The resulting composition of the impregnated oxygen reducing catalyst layer was after reduction a 1:1 vol ratio of Ni and Ce_{0.9}Gd_{0.1}O₂-5.

## Claims

1. Membrane, comprising in said order a first electronically conducting layer, an ionically conducting layer, and a second electronically conducting layer,
**characterized in that** the first and second electronically conducting layers are internally short circuited.

2. The membrane of claim 1, wherein the first and second electronically conducting layers are internally short circuited by internal electronically conducting paths which are provided through the ionically conducting layer.

3. The membrane of claim 1, wherein the first and second electronically conducting layers which sandwich the ionically conducting layer are edge short circuited by electronically conducting material being formed around said ionically conducting layer and connecting the first and second electronically conducting layers.

4. The membrane of any of claims 1 to 3, wherein
the electronically conducting layers are impregnated with catalyst material.

5. The membrane of claim 4, wherein the oxygen reducing catalyst material is Ni based or is a material selected from the group of Ni-Fe alloy, Ru, Pt, doped ceria, or doped zirconia, MaₛTi₁₋ₓMbₓO_{3-δ}, Ma = Ba, Sr, Ca; Mb = V, Nb, Ta, Mo, W, Th, U; 0.90 ≤ s ≤ 1.05; LnCr₁₋ₓMₓO_{3-δ}, M = T, V, Mn, Nb, Mo, W, Th, U; or mixtures thereof.

6. The membrane of claim 4, wherein the oxidation catalyst material is Ni based or chosen from from the group of (Ma₁₋ₓ(Mbₓ)(Mc_{1-y}Md_{y})O_{3-δ}, doped ceria or doped zirconia, or mixtures thereof (Ma = lanthanides or Y; Mb = earth alkali elements; Mc and Md are one or more elements chosen from the group of transition metals).

7. The membrane of any of claims 1 to 6, further comprising a bonding layer between the ionically conducting and the first and/or the second electronically conducting layer.

8. The membrane of any of claims 1 to 7, wherein the ionically conducting layer comprises a material selected from the group of doped ceria Ce₁₋ₓMₓO_{2-δ}, where M = Ca, Sm, Gd, Sc, Ga, Y and/or any Ln element, or combinations thereof; doped zirconia Zr₁₋ₓMₓO_{2-δ}, where M = Sc, Y, Ce, Ga or combinations thereof; perovskites (ABO₃), where A = Ca, Sr, Ba; B = Ce, Zr, Ti, Sn; Ba₂YSnO_{5.5}; Sr₂(ScNb)O₆; LnZr₂O₇; LaPO₄; and Ba₃B'B"O₉ (B'=Ca,Sr; B"=Nb, Ta); or materials of the "apatite" type.

9. The membrane of claim 8 wherein an electronic conductor is added to the ionically conducting layer prior to shaping the membrane structure.

10. The membrane of any of claims 1 to 7, wherein the electronically conducting layer comprises a metal.

11. The membrane of any of claims 1 to 7, wherein the electronically conducting layer comprises an oxide.

12. The membrane of claim 10, wherein the electronically conducting layer comprises metal selected from the group of Fe_{1-x-y}CrₓMa_{y} alloy, wherein Ma is Ni, Ti, Ce, Mn, Mo, W, Co, La, Y, or Al and/or metal oxides, doped ceria or doped zirconia.

13. A method of producing the membrane of claim 1, comprising the steps of:
providing an ionically conducting layer;
applying at least one layer of electronically conducting material on each side of said ionically conducting layer;
sintering the multilayer structure; and
impregnating the electronically conducting layers with a catalyst material or catalyst precursor material.

14. The method of claim 13, wherein the step of applying at least one layer of electronically conducting material on each side of the ionically conducting layer comprises the application of said electronically conductive material to two edges of the ionically conducting layer so as to short circuit said electronically conductive layers on each side of the ionically conducting layer.

15. The method of claim 13 or 14, comprising the step of growing electronically conducting material from each side of the ionically conducting layer into the ionically conducting material so as to short circuit said electronically conductive layers on each side of the ionically conducting layer.

16. Use of the membrane of any of claims 1 to 12 for oxygen separation.

17. Use of the membrane of any of claims 1 to 12 for hydrogen separation.
